# EUROPEAN PATENT APPLICATION

(11) **EP 1 522 801 A1**
(43) Date of publication of application: **13.04.2005**
(21) Application number: 04356054.9
(22) Date of filing: 19.04.2004
(51) Int. Cl.: F24H 8/00

(54) **Latent heat absorbing apparatus for gas boiler**

(30) Priority: 07.10.2003 KR 2003031461
(71) Applicant: Daesung Industrial Corporation, Seoul (KR)
(72) Inventor: Ryu, Hyun Wook, Cheongju-si, Chungcheongbuk-do (KR)
(74) Representative: Maureau, Philippe

(57) **Abstract**

Disclosed herein is a latent heat absorbing apparatus for a gas boiler. The gas boiler comprises a latent heat exchanger installed in a chamber such that the latent heat exchanger is separated from a sensible heat exchanger and from the outside of the gas boiler. Thermal transition between the heat exchangers and dropping of condensed water onto members of the gas boiler can be prevented. Further, smooth flow of exhaust gas can be maintained in an accelerated state at a first duct communicating with a combustion chamber and with the above chamber.

## Description

### BACKGROUND OF THE INVENTION

### Field of the Invention

The present invention relates to a gas boiler employing an upward-type Bunsen burner combustion system, and more particularly to a latent heat absorbing apparatus for a gas boiler, which recovers waste heat, generally being produced after heat exchange with heating water through a sensible heat exchanger and then discharged along with exhaust gas, through a latent heat exchanger, so that thermal efficiency is enhanced, resulting in a reduction of gas consumption.

### Description of the Related Art

In general, a gas boiler is constructed such that heat of exhaust gas produced after burning fuels, such as gas, is exchanged with the heat of water, such as heating water, in a heat exchanger disposed on a combustion chamber, thereby heating rooms or water.

Produced after the gas is burned in the gas boiler, the combustion gas is supplied to carry out heat exchange through the heat exchanger, and is then discharged out of the gas boiler as exhaust gas. In this case, the exhaust gas has a temperature of lower than the initial temperature of the combustion gas but higher than the room's temperature. Thus, investigations are being undertaken into a method for recycling latent heat of the exhaust gas.

Here, as to a method for recycling the latent heat of the exhaust gas, there was suggested a method of utilizing a dual-heat exchange system using both the combustion gas and the exhausted gas. With the method, the dual-heat exchange operation is accomplished by exchanging the heat of the initial combustion gas through the sensible heat exchanger and then exchanging the heat of the exhaust gas, produced after the above heat exchange, through the latent heat exchanger disposed on the sensible heat exchanger. However, there is a problem of deterioration in heat exchange efficiency of the sensible heat exchanger due to condensed water in the dual-heat exchange system. That is, produced in each tube defining passage of the heating water in the latent heat exchanger when the heat exchange is carried out, the condensed water drops onto the sensible heat exchanger, causing the deterioration thereof. There is also another problem of corrosion due to nitrogen oxides contained in the condensed water and moisture in the gas boiler. The nitrogen oxides tend to infiltrate the sensible heat exchanger or electronic devices of the gas boiler, causing corrosion thereof.

In addition, there are also problems caused by the arrangement of the latent heat exchanger and the sensible heat exchanger. That is, as the latent heat exchanger is arranged only on the sensible heat exchanger, the sensible heat exchanger carrying out the heat exchange at a relatively high temperature has a different temperature from that of the latent heat exchanger carrying out the heat exchange at a relatively low temperature. Thus, thermal transition and thermal flux occur in the gas boiler, causing deterioration in the heat exchange efficiency of both the sensible heat exchanger and the latent heat exchanger.

In recent years, in an attempt to overcome the problem caused by the arrangement as described above, there was developed a gas boiler with the heat exchangers dually installed by arranging the latent heat exchanger outside of the sensible heat exchanger. According to the dual structure of the heat exchanger, a burner is arranged above the boiler, and the heat produced by the burner is primarily exchanged in the sensible heat exchanger while combustion gas flows downward through the center of the sensible heat exchanger. Further, the heat of the exhaust gas after the heat exchange in the sensible heat exchanger is secondarily exchanged in the latent heat exchanger while the exhaust gas flows upward passing through the latent heat exchanger arranged outside the sensible heat exchanger. Then, the exhaust gas is discharged after the secondary heat exchange. In the above system, however, since each component of the sensible heat exchanger and latent heat exchanger is directly exposed to the heat of the burner, the components require a high heat resistance, causing problems of manufacturing costs and assembling.

### SUMMARY OF THE INVENTION

The present invention has been made to solve the above problems, and it is an object of the present invention to provide a latent heat absorbing apparatus for a gas boiler, which separates a sensible heat exchanger and a latent heat exchanger, thereby preventing thermal flux and thermal transition between the sensible heat exchanger and the latent heat exchanger.

It is another object of the present invention to provide a latent heat absorbing apparatus for a gas boiler, which prevent condensed water provided in the latent heat exchanger from dropping onto other members, such as the sensible heat exchanger.

It is yet another object of the present invention to provide a latent heat absorbing apparatus for a gas boiler, which prevents the velocity of exhaust gas from being lowered due to the addition of a latent heat exchanger.

In accordance with an aspect of the present invention, the above and other objects can be accomplished by the provision of a gas boiler comprising a combustion chamber, a sensible heat exchanger located at an upper portion of the combustion chamber, and a latent heat exchanger communicating with the combustion chamber to secondarily absorb heat from exhaust gas passing through the sensible heat exchanger, the gas boiler further comprising: a chamber for receiving the latent heat exchanger, the chamber having a box shape while being separated from the combustion chamber and from the outside of the gas boiler; a plurality of tubes arranged in the latent heat exchanger, each of the tubes allowing heating water to flow therein; a first duct communicating with the combustion chamber at one side of the chamber and with the chamber at the other side thereof; and a second duct having opening part communicating with the outside of the gas boiler and communicating with the chamber at the other side of the chamber.

Preferably, the chamber is opened at the top thereof, and the gas boiler further comprises a cover provided with an opening for communicating with the second duct and adapted to close the top of the chamber.

Preferably, the chamber has a slanted bottom lowered toward one side of the bottom, and the gas boiler has a drain opened at the one side of the bottom of the chamber to the outside of the gas boiler.

Preferably, the first duct has, at a portion communicating with the combustion chamber, a cross-sectional area larger than that at a portion communicating with the chamber, so that the exhaust gas fiows f rom the first duct into the chamber in an accelerated state.

Preferably, the chamber primarily prevents heat transition between the sensible heat exchanger and the latent heat exchanger, and a heat shielding plate attached to the outside of the chamber secondarily prevents the heat transition between them.

### BRIEF DESCRIPTION OF THE DRAWINGS

The foregoing and other objects and features of the present invention will be more clearly understood from the following detailed description taken in conjunction with the accompanying drawings, in which:
Fig. 1 is a cross-sectional view showing essential parts of a latent heat absorbing apparatus according to the present invention;
Fig. 2 is a cross-sectional view of a gas boiler according to the present invention; and
Figs. 3 and 4 are partial plane views of a tube according to the present invention.

### DESCRIPTION OF THE PREFERRED EMBODIMENTS

Preferred embodiments of the present invention will now be described in detail with reference to the accompanying drawings.

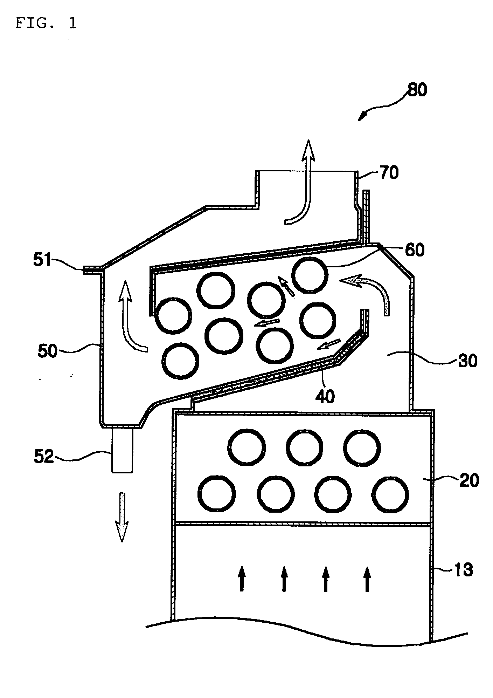

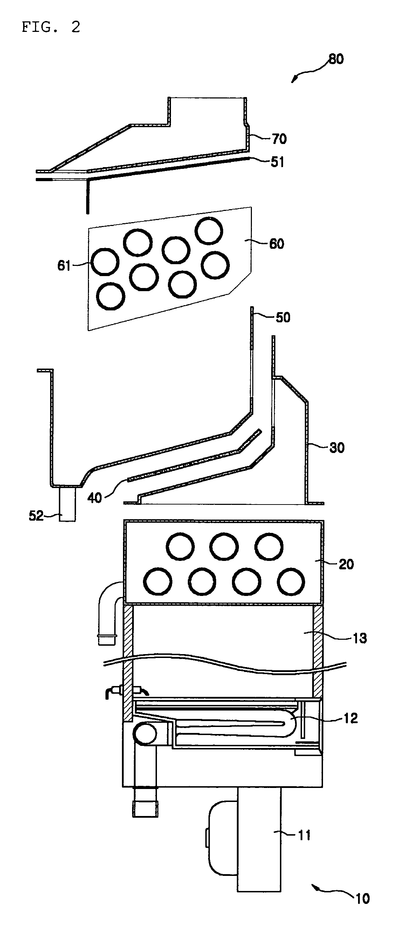

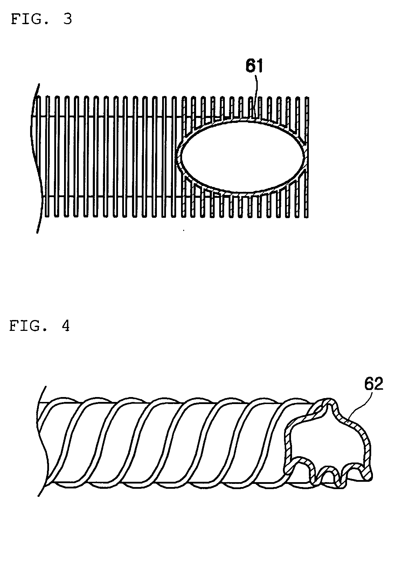

Fig. 1 shows a latent heat absorbing apparatus 80 according to the present invention, and Fig. 2 shows a gas boiler 10 provided with the latent heat absorbing apparatus 80 of the invention. Figs. 3 and 4 show a tube 61 of the latent heat absorbing apparatus 80 of the invention.

According to the present invention, the latent heat absorbing apparatus 80 is installed above a combustion chamber 13 of the gas boiler 10.

In addition to the combustion chamber 13, the gas boiler 10 includes a blower 11, a burner 12, a sensible heat exchanger 20 and a first duct 30.

The blower 11 is installed below the lowermost portion of the gas boiler 10. The blower 11 includes a motor that rotates with the application of electric power supplied thereto from the outside and a blowing fan rotated by a rotational force of the motor. The blowing fan sucks air from the outside of the gas boiler 10 through an opening communicating with the outside, and then blows air into the gas boiler 10 through an opening communicating with the inside of the gas boiler 10.

The burner 12 is located above the blower 11 to make an ignition for burning the air blown there into by the blower 11 and fuel including gas introduced through a fuel line in a mixed state.

The combustion chamber 13 defines a space for combusting the air and the gas and has a box shape isolated from the outside of the gas boiler.

The sensible heat exchanger 20 is arranged at an upper portion of the combustion chamber 13 and has a single or a plurality of tubes 61 allowing heating water to flow therein. Each of the tubes 61 is bent or folded in several portions to provide a box shape for the sensible heat exchanger 20.

The first duct 30 is located above the uppermost portion of the combustion chamber 13 to communicate with not only the combustion chamber 13 but also the outside of the combustion chamber.

Further, the first duct 30 has, at a portion communicating with the combustion chamber 13, a cross sectional area larger than that at a portion communicating with a chamber 50, which will be described below, so that exhaust gas from the combustion chamber 13 flows faster at the outlet of the first duct 30 than the inlet thereof.

The latent heat absorbing apparatus 80 comprises a chamber 50, a cover 51, a second duct 70, a latent heat exchanger 60, a drain 52 and a heat shielding plate 40.

The chamber 50 is located above the upper end of the first duct 30 such that the chamber 50 is very close to the first duct 30, and has a box shape opened at the top thereof.

The chamber 50 is opened at a portion connected with the first duct 30 such that the chamber communicates with an opening of the first duct.

The cover 51 has a plate shape to close the top of the chamber 50 opened, and is also opened at a connected portion with a second duct 70, which will be described below, such that the chamber 50 communicates with the second duct 70.

Further, the cover 51 is mounted on the chamber 50 with a fastening member including a bolt such that when mounting, for example, the latent heat exchanger 60 into the chamber 50 or repairing it in the chamber, the cover 51 is separated from the upper end of the chamber 50 to open the chamber 50.

Here, the communicating portion between the chamber 50 and the first duct 30 and the communicating portion between the cover 51 and the second duct 70 are provided at opposite ends, respectively, such that the exhaust gas can be transferred from one side of the chamber 50 to the other side thereof.

The second duct 70 is installed on the upper end of the cover 50 such that the second duct is very close to the cover. At one side of the second duct 70, an opening is provided at the bottom thereof to communicate with the opening provided at one end of the cover 51. At the other side of the second duct 70, a tubular shape opening is provided at the top thereof to communicate with the outside of the gas boiler.

The latent heat exchanger 60 is provided with a single or a plurality of tubes 61 therein such that each of the tubes is bent or folded in several portions to provide a box-like shape for the latent heat exchanger 60 to have a shape similar to that of the sensible heat exchanger 20. Further, the latent heat exchanger 60 has an outer shape fitted to the inside of the chamber 50 such that the latent heat exchanger 60 is attached to the inside of the chamber 50 after being mounted therein.

The drain 52 is formed at one side of the bottom of the chamber 50 such that condensed water filled in the chamber 50 can be discharged out. The drain 52 is provided to have a tubular shape with a predetermined width outwardly protruded from the chamber 50.

In accordance with the embodiment of the invention, the chamber 50 communicates with the first duct 30 at one end of the chamber 50 and with the second duct 70 at the other end thereof. At the bottom of the other side where the second duct 70 communicates with the chamber 50, the drain 52 is provided for the chamber 50 to communicate with the outside thereof.

The bottom of the chamber 50 is slanted toward the drain 52 to be lowered compared with other parts such that the condensed water can be easily discharged to the outside through the drain 52.

The heat shielding plate 40 has a plate shape, the same as that of the underside of the chamber 50, such that the heat shielding plate is attached to the underside of the chamber 50.

The heat shielding plate 40 is interposed into a region where the chamber 50 and the first duct 30 face each other, such that one end of the heat shielding plate 40 is connected to a lower portion of the chamber 50 and the other end thereof is connected to an upper portion of the first duct 30.

In addition, the heat shielding plate 40 is made of a material, such as ceramic, to prevent heat transition caused by a temperature difference between the combustion chamber 13 and the chamber 50.

As shown in Fig. 3, each tube 61 with a cylindrical tubular shape is provided with a plurality of fins arranged on the outer surface of the tube in the direction of the exhaust gas flowing on the tubes (Highly Finned Tube) . Alternatively, each tube 61 may have a fin structure different from that of Fig. 3. For example, as designated by the reference numeral 62 in Fig. 4, each tube may be provided with a protrusion and groove spirally extending along the tube on the inner and outer surfaces thereof (Spiral Tube). In either case, each tube has a relatively larger fin area in contact with the exhaust gas filled in the chamber 50 without interfering with the flow of the exhaust gas into the chamber 50.

Preferably, the tube 61 is made of a corrosion resistant aluminium material and the tube 62 is made of a corrosion resistance stainless steel material.

Operation of the latent heat absorbing apparatus for the gas boiler of the invention with the structure as described above will now be described.

As the gas boiler 10 is operated and electric power from the outside is applied to the blower 11 with a selective operation of the user, ambient air is blown through the blower 11 into the combustion chamber 13 located above the blower 11.

Air blown by the blower 11 and fuel, such as gas, are burned in a mixed state in the combustion chamber 13, being ignited by the burner.

As the gas and air are burned in the combustion chamber 13, heat and the heated exhaust gas are generated. When the heat and the exhaust gas flow on the tubes 61 of the sensible heat exchanger 20 installed at the upper portion of the combustion chamber 13, the heating water flowing in the tubes 61 is heated.

After heating the tubes 61 of the sensible heat exchanger 20 and the heating water therein, the exhaust gas flows into the latent heat absorbing apparatus 80 through the first duct 30 installed on the sensible heat exchanger 20.

Here, since the first duct 30 has a narrow outlet, the exhaust gas from the combustion chamber 13 to the first duct 30 flows faster when passing through the outlet of the first duct 30.

The exhaust gas accelerated in the first duct 30 flows into the chamber 50 communicating with the first duct 30 of the latent heat exchanger 80. The exhaust gas transferred into the chamber 50 flows into the latent heat exchanger 60 in the chamber 50, so that the heating water in the tubes 61 is heated and so that the heat of the exhaust gas is exchanged on the tubes 61 of the latent heat exchanger 60.

The exhaust gas subjected to the heat exchange on the tubes 61 is discharged out of the gas boiler 10 through the opening communicating with the second duct 70 above the chamber 50.

Here, the exhaust gas flowing on tubes 61 of the latent heat exchanger 60 smoothly flows with reduced flow resistance of the gas by the tubes, each of which has the shape of a plurality of fins arranged on the outer surface thereof in the direction of the exhaust gas flow on the tube, as shown in Fig. 3, or the shape of a relatively low protrusion spirally extending along the outer surface thereof, as shown in Fig. 4.

In the present embodiment, for smooth flow of the exhaust gas, each tube has the shape of the fins arranged on the tube in the direction of the exhaust gas flowing on the tubes or the shape of the outwardly protruded fins extending spirally thereon. However, the present invention is not limited to these fin shapes. Specifically, each tube may be provided with fins having holes perforated thereon in order to reduce the flow resistance of the gas.

Although there is a temperature difference between the combustion chamber 13 and the chamber 50, the heat transition from the sensible heat exchanger 20 of a relatively high temperature to the latent heat exchanger 60 is prevented by the chamber 50 separating the latent heat exchanger 60 from the sensible heat exchanger 20. Thus, the heat exchange is stably carried out in the combustion chamber 13 and the chamber 50 without outside influence.

Further, since the chamber 50 has the bottom slanted toward the drain 52 formed at one side of the bottom of the chamber 50, even though the condensed water produced in the latent heat exchanger 60 falls to the bottom of the chamber 50, it flows along the shape of the bottom of the chamber 50 toward the drain 52 due to the force of the gravity, and is then discharged out of the gas boiler 10 through the drain 52.

Assembly of the latent heat exchanger 60 into the chamber 50 or repair thereof can be accomplished with the upper side of the chamber 50 opened by separating the cover 51 fastened to the upper end of the chamber 50.

As is apparent from the description, in accordance with the present invention, there is an advantageous effect that as the latent heat exchanger is separated from the sensible heat exchanger with the chamber, thermal transition and thermal flux between the latent heat exchanger and the sensible heat exchanger are prevented, thereby enhancing the heat exchange efficiency of the respective heat exchangers.

There is another advantageous effect that as the latent heat exchanger is separated from other members in the gas boiler with the chamber, deterioration of the members due to the contact with the condensed water produced in the latent heat exchanger is prevented.

There is yet another advantageous effect that as the exhaust gas blown by the blower is accelerated at the outlet of the first duct, a reduction in velocity of the exhaust gas flowing between the sensible heat exchanger and the latent heat exchanger is prevented, thereby not only providing smooth heat exchange and discharge of the exhaust gas, but also eliminating a need for adding other apparatuses or structures for enhancing the blowing of the exhaust gas by an addition of the latent heat exchanger.

It should be understood that the embodiments and the accompanying drawings as described above have been described for illustrative purposes and the present invention is limited by the following claims. Further, those skilled in the art will appreciate that various modifications, additions and substitutions are allowed without departing from the scope and spirit of the invention as set forth in the accompanying claims.

## Claims

1. A gas boiler comprising a combustion chamber, a sensible heat exchanger installed at an upper portion of the combustion chamber, and a latent heat exchanger communicating with the combustion chamber to secondarily absorb heat from exhaust gas passing through the sensible heat exchanger, the gas boiler further comprising:
a chamber for receiving the latent heat exchanger, the chamber having a box shape while being separated from the combustion chamber and from the outside of the gas boiler;
a plurality of tubes arranged in the latent heat exchanger, each of the tubes allowing heating water to flow therein;
a first duct communicating with the combustion chamber at one side of the first chamber and with the chamber at the other side thereof; and
a second duct communicating with the outside of the gas boiler at one side of the second chamber and with the chamber at the other side thereof.

2. The gas boiler as set forth in claim 1, wherein the chamber is opened at the top thereof, and the gas boiler further comprises a cover provided with an opening for communicating with the second duct and adapted to close the top of the chamber.

3. The gas boiler as set forth in claim 1, wherein the chamber has a slanted bottom lowered toward one side of the bottom of the chamber, and the gas boiler has a drain opened at said one side of the bottom to the outside of the gas boiler.

4. The gas boiler as set forth in claim 1, wherein the first duct has, at a portion communicating with the combustion chamber, a cross-sectional area larger than that at a portion communicating with the chamber, so that the exhaust gas flows from the first duct into the chamber in an accelerated state.
